# EUROPÄISCHE PATENTSCHRIFT

(11) **EP 1 223 024 B1**
(45) Veröffentlichungstag und Bekanntmachung des Hinweises auf die Patenterteilung: **21.09.2005**
(21) Anmeldenummer: 02000864.5
(22) Anmeldetag: 15.01.2002
(51) Int. Cl.: B29C 49/56, B29C 49/04, B29C 33/34, B29C 33/20

(54) **Blasformmaschine mit einer Spannvorrichtung**
Blow moulding machine with clamping mechanism
Machine de moulage par soufflage comportant un mécanisme de serrage

(30) Priorität: 15.01.2001 DE 10101462
(43) Veröffentlichungstag der Anmeldung: 17.07.2002
(73) Patentinhaber: BEKUM Maschinenfabriken GmbH, D-12107 Berlin (DE)
(72) Erfinder: Mehnert, Gottfried, 14195 Berlin (DE); Hennemann, A-3133 Traismauer (AT)
(74) Vertreter: Flosdorff, Jürgen

(56) Entgegenhaltungen:
- DE-A- 1 604 634
- DE-A- 2 413 101
- US-A- 3 115 673
- US-A- 3 685 943
- US-A- 3 767 747
- US-A- 3 978 184
- US-A- 4 259 056
- US-A- 4 468 368
- US-A- 5 114 335
- US-A- 5 639 415
- US-A- 5 641 451
- US-A- 5 698 241

## Beschreibung

Die Erfindung betrifft eine Blasformmaschine mit einer Schließeinheit, die an Aufspannplatten bzw. Schließplatten angebrachte Blasformhälften aufweist und zwischen einem Kopf und einer Kalibriervorrichtung verfahrbar ist, die einen Kalibrierzylinder enthält, dessen Kolbenstange mit einem Blasdorn und einem Schneidring verbunden ist, der beim Kalibrieren gegen eine Schneidbacke der Blasform gepreßt wird.

Beim Blasformverfahren wird zunächst ein Vorformling erzeugt, um den sich dann eine Blasform schließt. In der Blasform wird der Vorformling meist über einen oder auch mehrere Blasdorne mit Luft aufgeblasen, was oft an der Stelle erfolgt, die später auch die Befüllöffnung des fertigen Behälters darstellt. Damit diese Öffnung dicht verschließbar ist, sollte ihr Rand möglichst glatt sein. Insbesondere bei der Produktion von Getränkeflaschen oder Kanistern wird dies dadurch erreicht, daß der Blasdorn hinter seiner Spitze eine kleine Stufe aufweist, den sogenannten Schneidring, der mit großer Kraft gegen eine entsprechend ausgearbeitete und gehärtete Gegenfläche der Blasform, die sogenannte Schneidbacke, gedrückt wird. Bei diesem Vorgang wird zusätzlich der Abfall vom oberen Rand der Einfüllöffnung vorgestanzt oder getrennt. Diese Vorgehensweise ist seit langem üblich und hat sich bewährt.

Die Qualität der Dichtfläche der so hergestellten Behälter und die Lebensdauer von Schneidring und Schneidbacke hängen unter anderem davon ab, wie sich die an dem Kraftschluß beteiligten Bauteile der Blasformmaschine unter Last verhalten. Bereits geringfügige Exzentrizitäten in der Größenordnung von wenigen Hundertstel Millimeter oder eine sich unter Last ändernde Lage des Blasdorns zur Blasform führen zu einem erhöhten Verschleiß der Kontaktflächen und zu Unzulänglichkeiten bei den hergestellten Behältern.

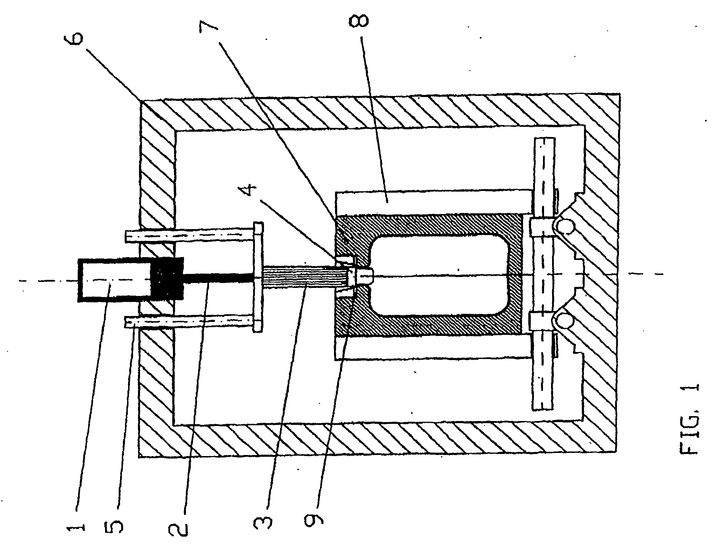

Dieses Problem wird nachfolgend im Zusammenhang mit der beigefügten Figur 1 näher beschrieben, die eine herkömmliche Anordnung einer Kalibriervorrichtung zeigt, unter der sich eine Schließeinheit befindet. Die Kalibrierkraft wird über einen Hydraulikzylinder 1 ausgeübt, dessen Kolbenstange 2 zentrisch mit einem Blasdorn 3 verbunden ist, der hinter seiner Spitze den oben erwähnten Schneidring 4 aufweist. Der Blasdorn 3 wird -wie dies meist der Fall ist- zusätzlich durch eine Führung 5 geführt, die ebenso wie der Hydraulikzylinder 1 fest an dem Maschinengestell 6 montiert ist, das aus der Sicht der Fig. 1 eine Rechteckform hat.

Die Blasformhälften 7 sind über die unter Schließkraft geschlossenen Aufspannplatten 8 ebenfalls fest mit dem Maschinengestell verbunden. Die Blasform weist die Schneidbacke 9 auf.

Bei dieser herkömmlichen Anordnung erfolgt der "Kraftschluß" demnach über folgende Bauteile: Hydraulikzylinder 1 - Blasdorn 3 - Schneidring 4 - Schneidbacke 9 - Blasformhälften 7 - Aufspannplatten 8 - Maschinengestell 6 - Hydraulikzylinder 1.

Die in Fig. 1 dargestellte Anordnung ist von der Symmetrie her ideal. Trotz der Vielzahl der bei der Kraftübertragung beteiligten Bauteile und der relativ langen Übertragungswege gelingt eine exakte Blasdornführung.

Nachteil ist u.a., daß das Maschinengestell sehr stabil ausgebildet sein muß (kostenintensiv), daß die Form und die umliegenden Vorrichtungen teilweise nur umständlich erreichbar sind (Bedienungsfreundlichkeit), und daß es umständlich oder sogar unmöglich sein kann, zu einer asymmetrischen Schließeinheit ein symmetrisches Maschinengestell zu bauen.

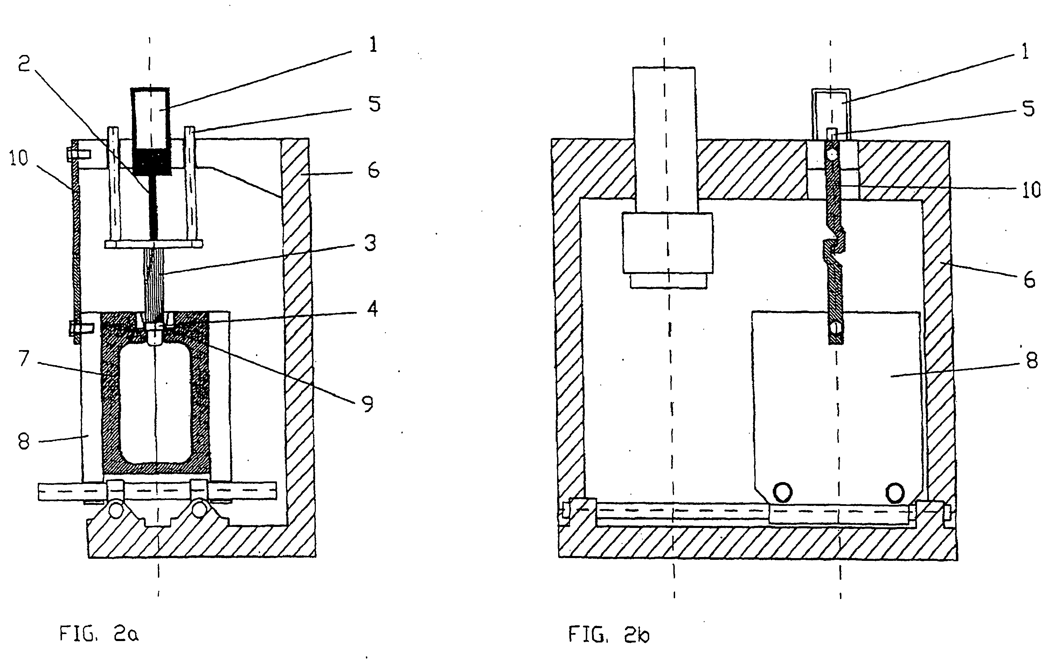

Als Alternative kam schon sehr früh die "Hakenlösung" auf den Markt und ist heute bei einem sehr großen Teil der kontinuierlich arbeitenden Blasmaschinen realisiert. Das Prinzip ist in Fig. 2a und 2b skizziert.

In Fig. 2a erkennt man, daß der rechte Teil der Maschine dem unter Fig. 1 beschriebenen Fall gleicht. Der Kraftfluß ist so, wie dort beschrieben. Der linke Teil des Maschinengestells wurde durch eine starre Hakenverbindung (10) ersetzt, die in der Frontansicht (Fig. 2b) noch deutlicher zu erkennen ist.

Das grundsätzlich unterschiedliche elastische Verhalten der beiden Kraftverbindungen kann teilweise über das Hakenspiel ausgeglichen werden. Erst wenn Kalibrierkraft und Maschinengröße eine bestimmte Größe erreicht haben, wirken sich die Unterschiede aus: Die Blasdornführung ist nicht mehr ausreichend und führt zu den eingangs erwähnten Mängeln in der Produktion.

Die DE-A-24 13 101 offenbart eine Blasformmaschine der eingangs genannten Art, bei der an einer der Aufspannplatten ein Befestigungs- bzw. Kopplungsmittel befestigt ist, das beim Kalibrieren im kraftschlüssigen Eingriff mit einer Halterung, die Bestandteil der Kalibriervorrichtung ist, stehen kann.

Die US-A-5,114,335 und die US-A-5,641,451 offenbaren zwar das Merkmal, daß an beiden Aufspannplatten ein Befestigungs- bzw. Kopplungsmittel befestigt ist, das bei dem Arbeitsvorgang im kraftschlüssigen Eingriff mit einer Halterung der Vorrichtung stehen kann, jedoch handelt es sich dabei nicht um eine Kalibriervorrichtung.

Der vorliegenden Erfindung liegt die Aufgabe zugrunde, eine Blasformmaschine der eingangs genannten Art so weiter zu entwickeln, daß eine möglichst exakte Übertragung der Kalibrierkräfte gewährleistet ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß die Blasform auf "kurzem Weg" mit der Kalibriervorrichtung verbunden wird, dieses aber nur für die Zeitspanne, während der sich die geschlossene Blasform unter der Kalibriervorrichtung befindet.

Die naheliegende Idee, den vorn mit der Schließplatte verschraubten Haken in gleicher Weise auch an der hinteren Schließplatte zu installieren, scheitert bei den meisten Anwendungen wegen unvermeidbarer Kollisionen mit anderen Maschinenteilen. Deshalb sind an den Aufspannplatten Befestigungs- bzw. Kopplungsmittel befestigt, die beim Kalibrieren im kraftschlüssigen Eingriff mit einer Halterung stehen, die Bestandteil der Kalibriervorrichtung ist. Diese Befestigungs- bzw. Kopplungsmittel sind bevorzugt Verriegelungseinrichtungen, die nachfolgend der Einfachheit halb als "Riegel" bezeichnet werden.

Damit ist ein kurzer und zur Formtrennebene symmetrischer Kraftschluß zwischen der Blasform und dem Kalibrierzylinder erreicht, der eine äußerst exakte Übertragung der Kalibrierkräfte gewährleistet.

Da der durch die Reaktionskräfte entstehende Kraftfluß zwischen den Blasformhälften und dem Kalibrierzylinder kurz und für beide Blasformhälften gleich ist, kann eine winkelige oder exzentrische Auslenkung der Kalibriervorrichtung und des damit verbundenen Blasdorns weitgehend ausgeschlossen werden.

Weiter ist erfindungsgemäß vorgesehen, daß die Riegel schwenkbar sind und im hochgeschwenkten Zustand in dem kraftschlüssigen Eingriff mit der Halterung stehen, und daß sie diesen hochgeschwenkten Zustand nur dann einnehmen, wenn sich die Schließeinheit in der Kalibrierposition befindet und die Blasform geschlossen ist. In allen anderen Phasen des Betriebs befinden sich die Riegel in einem herabgeschwenkten Zustand, so daß gewährleistet ist, daß bei allen auftretenden Bewegungen der Schließeinheit bzw. der Blasform Kollisionen mit anderen Maschinenteilen ausgeschlossen sind. Hierdurch ist die Betriebssicherheit der erfindungsgemäßen Blasformmaschine gewährleistet.

In weiteren Einzelheiten wird vorgeschlagen, daß die Riegel eine Hakenform haben, deren abgewinkelter Endabschnitt eine Kontaktfläche der Halterung übergreift. Zweckmäßigerweise ist jede Aufspannplatte mit einem Riegel versehen, der mittig an der Aufspannplatte angebracht ist, wobei es aber auch im Rahmen der Erfindung liegt, daß mehr als ein Riegel pro Aufspannplatte vorgesehen sein kann.

Die Riegel sind um horizontale Achsen schwenkbar, und der Schwenkbereich jedes Riegels beträgt bevorzugt 90°, was bedeutet, daß die Riegel aus einer horizontalen Lage in eine vertikal nach oben ragende Lage verschwenkbar sind, um oberhalb der Blasform in Eingriff mit der Halterung der Kalibriervorrichtung zu geraten.

Diese Halterung hat in einer bevorzugten Ausführungsform einen umgekehrt U-förmigen Rahmen mit einer horizontalen Platte, die mittig von dem Kalibrierzylinder durchgriffen wird, und vertikalen Schenkeln, von deren freien Enden die Kontaktflächen nach außen ragen, die von den Riegeln übergriffen werden. Die Halterung ist symmetrisch zu ihrer Mittellängsachse aufgebaut und ihre vertikalen Schenkel verlaufen beidseitig der Kolbenstange parallel zu dieser.

Die Kontaktflächen der Halterung, die in Eingriff mit den hakenförmig abgewinkelten Endabschnitten der Riegel gelangen, können durch Platten gebildet sein, die an den freien Enden der vertikalen Schenkel der Halterung angesetzt sind und nach außen über die Schenkel hinaus vorstehen.

Mit großem Vorteil wird weiter vorgeschlagen, daß jeder Riegel drehfest mit einer zugehörigen Drehachse verbunden ist, die mit einem Kurvengetriebe in Verbindung steht, das nicht-drehbar, aber gegenüber der Drehachse axial verschieblich angeordnet ist, und daß beim Auftreffen des Kurvengetriebes auf einen Anschlag das Kurvengetriebe verschoben wird und dabei die Drehachse des Riegels und damit den Riegel dreht.

In weiteren Einzelheiten kann die Ausbildung so getroffen sein, daß an jeder Drehachse ein starres Verbindungsgestänge fest angesetzt ist, das sich in axialer Richtung erstreckt und mit einer Rolle in einer spiralförmigen Nut des Kurvengetriebes sitzt. Das Kurvengetriebe ist seinerseits mit einem seitlichen starren Arm versehen, der mit einer Rolle in eine axiale Führungsbahn eingreift, wodurch das Kurvengetriebe axial verschieblich, jedoch nicht-drehbar gehalten ist.

Wenn das Kurvengetriebe mit einem Druckstift, der von seiner Stirnseite vorsteht, auf den hierzu vorgesehenen Anschlag auftrifft, wird es demnach gegen Federkraft in Richtung der Drehachse verschoben, wobei das Verbindungsgestänge durch seinen Sitz in der spiralförmigen Nut des Kurvengetriebes in dessen Umfangsrichtung bewegt wird, wodurch die Drehachse mit dem Haken gedreht bzw. verschwenkt wird.

Die beiden Anschläge für die Kurvengetriebe sind so positioniert, daß die Kurvengetriebe nur dann auf die Anschläge auflaufen, wenn sich die Schließeinheit an der Kalibrierstation befindet und die Blasform geschlossen ist.

Weiter wird vorgeschlagen, daß die Kolbenstange mit einer U-förmigen Führung verbunden ist, deren vertikale Holme in Durchgangsbohrungen der horizontalen Platten der Halterung geführt sind. Auch dies trägt zu der exakten Übertragung der Kalibrierkräfte bei.

Weiter kann vorgesehen sein, daß die Kalibriervorrichtung über ein Gelenk an dem Maschinengestell aufgehängt ist, das wegen des kurzen Kraftschlusses nicht -wie dies bei herkömmlichen Blasmaschinen der Fall ist- die Form eines geschlossenen rechteckigen Rahmens haben muß. Die Kalibriervorrichtung kann statt dessen an einem sich nur über die halbe Breite erstreckenden oberen Schenkel des Maschinengestells aufgehängt sein.

Bei der erfindungsgemäßen Blasformmaschine läuft der Arbeitszyklus folgendermaßen ab:
1. Die Schließeinheit befindet sich unter dem Kopf, die Riegel sind heruntergeklappt.
2. Die Blasform wird geschlossen, die Riegel machen diese Bewegung nach "innen" im heruntergeklappten Zustand mit, die Schließeinheit fährt zur Kalilbrierstation;
3. Bevor die Endlage erreicht ist, laufen die beiden Kurvengetriebe auf die zugehörigen Anschläge auf und bewirken das Hochklappen der Riegel. Die Kontaktflächen der Riegel und der Platten haben nun einen Abstand von wenigen 10tel Millimeter voneinander;
4. Nach Herunterfahren des Blasdorns zur Schneidbacke und Aufbringen der Kalibrierkraft legen sich die Kontaktflächen von Platten und Riegel aneinander an und es entsteht der gewünschte "kurze" und symmetrische Kraftschluß zwischen Kalibriervorrichtung und Schließeinheit ohne Umweg über das Maschinengestell;
5. Ende des Blasvorgangs, Druckentlastung des Kalibrierzylinders und öffnen der Blasform. Durch die öffnungsbewegung werden die Anschläge verlassen, die Riegel klappen -unterstützt durch Fe-derkraft - nach unten;
6. Die Schließeinheit fährt mit geöffneter Blasform zum Kopf, die Riegel bleiben unten;
7. Erneuter Zyklus wie oben.

Wie oben bereits erwähnt, ist die Riegeleinrichtung so ausgelegt, daß die Riegel nur dann hochgeklappt sind, wenn die Blasform geschlossen ist und die Schließeinheit in der Kalibrierstation steht. Die Anschläge sind dabei so ausgestaltet, daß sie ihre Funktion unabhängig davon erfüllen, in welcher Reihenfolge die oben beschriebene Endlage erreicht wird. Dies bedeutet, daß die Riegel auch durch die Schließbewegung der Blasform nach oben geklappt werden, wenn diese Bewegung irrtümlich erst unter der Kalibrierstation ausgeführt wird. Hierzu sind die Anschläge mit entsprechenden schrägen Rampen versehen, auf die die Kurvengetriebe beim Schließvorgang auflaufen, wodurch die zum Schwenken der Riegel erforderliche Axialbewegung erzwungen wird.

Die Riegel klappen demnach auch nach unten, wenn die Blasform an der Kalilbrierstation geöffnet wird. Natürlich klappen die Riegel auch dann nach unten, wenn die Schließeinheit -wie dies grundsätzlich erfolgen soll- zum Kopf zurückfährt.

Es liegt im Rahmen der Erfindung, daß die Schwenkbewegung der Riegel nicht an die normalen Maschinenbewegungen gekoppelt ist, wie dies oben beschrieben ist, sondern daß zum Verschwenken der Riegel zusätzliche Betätigungselemente vorgesehen sein können, beispielsweise Hydraulikzylinder, Elektromotoren, Elektromagneten oder ähnliches, die von der Maschinensteuerung ausgelöst und überwacht werden.

Weitere Einzelheiten der Erfindung ergeben sich aus der nachfolgenden Beschreibung einer bevorzugten Ausführungsform sowie anhand der Zeichnung. Dabei zeigen auf weitgehend schematische Weise:
- Fig. 1: die symmetrische Anordnung einer Schließeinheit an der Kalibrierstation nach dem Stand der Technik;
- Fig. 2a und 2b: eine Anordnung mit einem starren Haken nach dem Stand der Technik;
- Fig. 3a und 3b: eine Ausführungsform der Erfindung in Darstellungen ähnlich den Fig. 2a und 2b und
- Fig. 4: eine rein schematische perspektivische Darstellung des Riegelmechanismus.

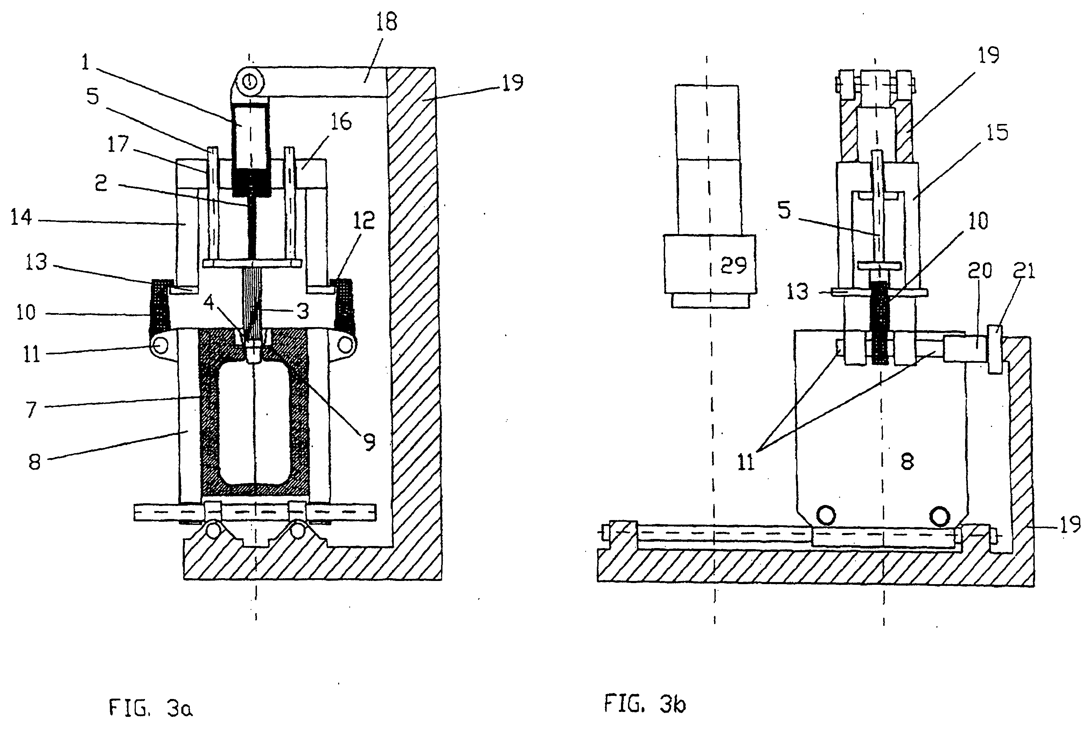

In den Figuren 3a und 3b sind die Bauteile, die mit Bauteilen der herkömmlichen Vorrichtungen gemäß Fig. 1, 1a und 2b übereinstimmen, mit denselben Bezugszeichen gekennzeichnet, wobei auf deren Wiederholung verzichtet wird.

Bei der erfindungsgemäßen Maschine ist am oberen Randbereich der Aufspann- bzw. Schließplatten 8 jeweils ein Riegel 10 angelenkt, dessen Mittellängsachse sich auf der Mittellängsachse der Schließplatte 8 befindet.

Die beiden Riegel 10 sind um zugehörige horizontale Drehachsen 11 um etwa 90° schwenkbar. Im hochgeschwenkten Zustand liegen ihre hakenförmig abgewinkelten Endabschnitte 12 auf der Oberseite von zwei Platten 13 auf, die am unteren Ende von vertikalen Stegen 14 einer insgesamt mit dem Bezugszeichen 15 gekennzeichneten Halterung angesetzt sind Diese Halterung 15 ist ein starrer Rahmen, der in beiden Darstellungen der Figuren 2a und 2b eine umgekehrte U-Form hat.

Die Halterung 15 ist fester Bestandteil der Kalibriervorrichtung, indem sie mit dem Kalibrierzylinder 1 fest verbunden ist, der zentrisch die obere horizontale Platte 16 der Halterung 15 durchgreift und fest mit dieser verbunden ist.

Durch die obere horizontale Platte 16 der Halterung 15 verlaufen beidseitig des Kalibrierzylinders 1 zwei Durchgangsbohrungen 17, in denen die vertikalen Holme 5 der Führung geführt sind.

Die gesamte Kalibriervorrichtung ist an einem oberen horizontalen Arm 18 des Maschinengestells 19 gelenkig aufgehängt.

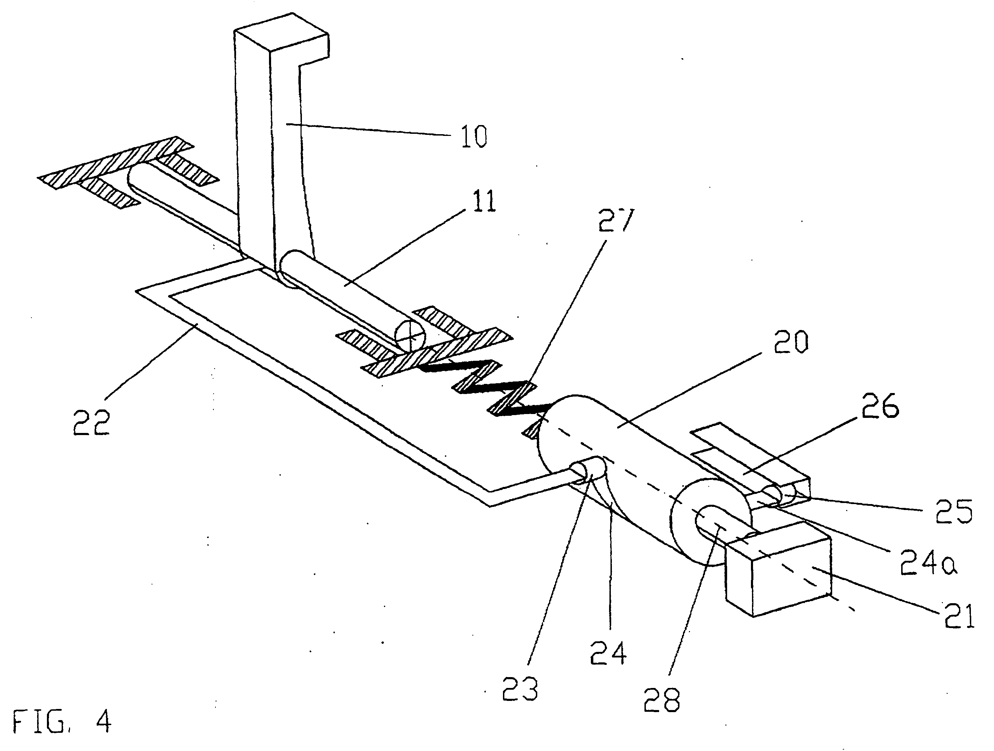

Wie die Figuren 3b und 4 zeigen, enthält der Riegelmechanismus ein Kurvengetriebe 20, das an der Kalibrierstation auf einen Anschlag 21 auftrifft, wenn die Blasform geschlossen ist.

Einzelheiten des Riegelmechanismus sind schematisch in Figur 4 dargestellt. An der Drehachse 11, die mit dem Riegel 10 drehfest verbunden ist, ist ein starres Gestänge 22 angebracht, das sich über die Drehachse 11 hinaus erstreckt und an seinem nach innen ragenden Ende eine Rolle 23 trägt, die in einer spiralförmigen Nut 24 des Kurvengetriebes 20 sitzt. Das Kurvengetriebe 20 ist mit einem starren seitlichen Arm 24a versehen, der an seinem freien Ende eine weitere Rolle 25 trägt. Die Rolle 25 sitzt in einer in axialer Richtung verlaufenden Führungsnut 26.

Das Kurvengetriebe 20 ist gegen die Kraft einer Feder 27 in Richtung der Drehachse 11 verschieblich, wobei das Kurvengetriebe 20 nicht-drehbar gehalten ist.

Von der vorderen Stirnseite des Kurvengetriebes 20 steht ein Druckstift 28 vor, der auf den Anschlag 21 auftrifft, wenn die Schließeinheit von der Kopfstation 29 in die Kalibrierstellung verfahren wird. Dabei wird der Abstand zwischen dem Kurvengetriebe 20 und der Drehachse 11 gegen Federkraft verringert, wobei die Rolle 23 des Gestänges 22 in der spiralförmigen Nut 24 geführt wird und der Riegel 10 aus der horizontalen Ausgangsstellung in die vertikale Eingriffsstellung verschwenkt wird.

Wenn die Schließeinheit wieder zur Kopfstation 29 zurückfährt, werden die Riegel 10 entsprechend zurückverschwenkt.

Obwohl dies in Fig. 4 nicht dargestellt ist, sind die Anschläge 21 mit schrägen Rampen versehen, auf die die Druckstifte 28 der Kurvengetriebe 20 auflaufen, wenn die Blasform erst an der Kalibrierstation geschlossen wird.

## Patentansprüche

1. Blasformmaschine mit einer Schließeinheit, die an Aufspannplatten (8) angebrachte Blasformhälften(7) aufweist und zwischen einer Kopfstation und einer Kalibrierstation verfahrbar ist, die einen Kalibrierzylinder (1) enthält, dessen Kolbenstange (2) mit einem Blasdorn (3) und einem Schneidring (4) verbunden ist, der beim Kalibrieren gegen eine Schneidbacke (9) der Blasform gepreßt wird, wobei an einer der Aufspannplatten (8) ein Befestigungs- bzw. Kopplungsmittel befestigt ist, das beim Kalibrieren im kraftschlüssigen Eingriff mit einer Halterung, die Bestandteil der Kalibriervorrichtung ist, stehen kann,
**dadurch gekennzeichnet,**
**daß** auch an der anderen Aufspannplatte (8) ein Befestigungs- bzw. Kopplungsmittel (10) befestigt ist, das beim Kalibrieren im kraftschlüssigen Eingriff mit der Halterung (15) der Kalibriervorrichtung stehen kann, so daß der durch die Reaktionskräfte entstehende Kraftfluß zwischen den Blasformhälften und dem Kalibrierzylinder möglichst kurz und für beide Blasformhälften gleich ist.

2. Blasformmaschine nach Anspruch 1,
**dadurch gekennzeichnet, daß** die Befestigungs- bzw. Kopplungsmittel Verriegelungseinrichtungen sind.

3. Blasformmaschine nach Anspruch 1 oder 2,
**dadurch gekennzeichnet, daß** die Verriegelungseinrichtungen (10) schwenkbar sind
und im hochgeschwenkten Zustand in dem kraftschlüssigen Eingriff mit der Halterung (15) stehen können.

4. Blasformmaschine nach einem der Ansprüche 1 bis 3,
**dadurch gekennzeichnet, daß** die Verriegelungseinrichtungen (10) eine Hakenform haben, deren abgewinkelter Endabschnitt (12) eine Kontaktfläche (13) der Halterung (15) übergreifen können.

5. Blasformmaschine nach einem der Ansprüche 1 bis 4,
**dadurch gekennzeichnet, daß** die Verriegelungseinrichtungen (10) um horizontale Achsen (11) schwenkbar sind.

6. Blasformmaschine nach einem der Ansprüche 1 bis 5,
**dadurch gekennzeichnet, daß** die Verriegelungseinrichtungen (10) um etwa 90° schwenkbar sind.

7. Blasformmaschine nach einem der Ansprüche 1 bis 6,
**dadurch gekennzeichnet, daß** jede Verriegelungseinrichtung bzw. jeder Haken (10) auf einer zugehörigen Drehachse (11) sitzt, die mit einem nicht-drehbaren, aber gegenüber dem Haken (10) axial verschieblichen Kurvengetriebe (20) in Verbindung steht, das beim Auftreffen auf einen Anschlag (21) gegen Federkraft verschiebbar ist und dabei die Drehachse (11) dreht.

8. Blasformmaschine nach einem der Ansprüche 1 bis 7,
**dadurch gekennzeichnet, daß** die Drehachse (11) fest mit einem Verbindungsgestänge (22) verbunden ist, das mit einer Rolle (23) in einer spiralförmigen Nut (24) des Kurvengetriebes (20) geführt ist.

9. Blasformmaschine nach einem der Ansprüche 1 bis 8,
**dadurch gekennzeichnet, daß** an dem Kurvengetriebe (20) ein seitlicher Arm (24a) mit einer Rolle (25) befestigt ist, die in einer axialen Führungsbahn (26) sitzt.

10. Blasformmaschine nach einem der Ansprüche 1 bis 9,
**dadurch gekennzeichnet, daß** von der Stirnseite des Kurvengetriebes (20) ein Druckstift (28) vorsteht, der auf den Anschlag (21) auftrifft.

11. Blasformmaschine nach einem der Ansprüche 1 bis 10,
**dadurch gekennzeichnet, daß** die Anschläge (21) so an der Kalibrierstation positioniert sind, daß die Kurvengetriebe (20) nur bei geschlossener Blasform auf die Anschläge (21) auflaufen können.

12. Blasformmaschine nach einem der Ansprüche 1 bis 11,
**dadurch gekennzeichnet, daß** die Halterung einen umgekehrt U-förmigen Rahmen aufweist mit einer horizontalen Platte (16), die mittig von dem Kalibrierzylinder (1) durchgriffen ist und vertikalen Schenkeln (14), von deren freien Enden die Kontaktflächen nach außen ragen, die von den Riegeln (10) übergriffen werden.

13. Blasformmaschine nach Anspruch 12,
**dadurch gekennzeichnet, daß** an den freien Enden der vertikalen Schenkel (14) jeweils eine nach außen überstehende Platte (13) angesetzt ist.

14. Blasformmaschine nach einem der Ansprüche 1 bis 13,
**dadurch gekennzeichnet, daß** die Kolbenstange (2) mit einer U-förmigen Führung (5) verbunden ist, deren vertikale Holme in Durchgangsbohrungen (17) der horizontalen Platte (16) der Halterung (15) geführt sind.

15. Blasformmaschine nach einem der Ansprüche 1 bis 14,
**dadurch gekennzeichnet, daß** die Kalibriervorrichtung über ein Gelenk an dem Maschinengestell (19) aufgehängt ist.

## Claims

1. A blow molding machine comprising a closing unit which comprises blow mold halves (7) provided on clamping plates (8) and is movable between a head station and a calibration station including a calibration cylinder (1) whose piston rod (2) is connected to a blow pin (3) and a cutting ring (4) which during calibration is pressed against a cutting jaw (9) of the blow mold, one of the clamping plates (8) having secured thereto a fastening or coupling means which during calibration may be in frictional engagement with a mounting, which is part of the calibration device,
**characterized in that**
the other clamping plate (8) has also secured thereto a fastening or coupling means (10) which during calibration may be in frictional engagement with the mounting (15) of the calibration device, so that a power flow created by reaction forces between the blow mold halves and the calibration cylinder is as short as possible and identical for both blow mold halves.

2. The blow molding machine according to claim 1,
**characterized in that** the fastening or coupling means are locking means.

3. The blow molding machine according to claim 1 or 2,
**characterized in that** the locking means (10) are pivotable and, in a swung-up state, may be in frictional engagement with the mounting (15).

4. The blow molding machine according to any one of claims 1 to 3,
**characterized in that** the locking means (10) have the shape of hooks, each hook having an angled end section (12) that grips over a contact surface (13) of the mounting (15).

5. The blow molding machine according to any one of claims 1 to 4,
**characterized in that** the locking means (10) are pivotable about horizontal axes (11).

6. The blow molding machine according to any one of claims 1 to 6,
**characterized in that** the locking means (10) are pivotable by about 90°.

7. The blow molding machine according to any one of claims 1 to 6,
**characterized in that** each locking means or each hook (10) is seated on an associated rotational shaft (11) which communicates with a cam gear (20) that is non-rotatable, but axially displaceable relative to the hook (10) and is displaceable against resilient force upon impingement on a stop (21), thereby rotating said rotational shaft (11).

8. The blow molding machine according to any one of claims 1 to 7,
**characterized** that the rotational shaft (11) is firmly connected to a connection linkage (22) which is guided with a roll (23) in a spiral groove (24) of the cam gear (20).

9. The blow molding machine according to any one of claims 1 to 8,
**characterized in that** the cam gear (20) has secured thereto a lateral arm (24a) with a roll seated (25) in an axial guide path (26).

10. The blow molding machine according to any one of claims 1 to 9,
**characterized in that** a press pin (28) which abuts on the stop (21) projects from the front side of the cam gear (20).

11. The blow molding machine according to any one of claims 1 to 10,
**characterized in that** the stops (21) are positioned on the calibration station such that the cam gear (20) will only abut on the stops (21) in the closed state of the blow mold.

12. The blow molding machine according to any one of claims 1 to 11,
**characterized in that** the mounting comprises an inverted U-shaped frame with a horizontal plate (16) centrally passed through by the calibration cylinder (1), and with vertical legs (14) from the free ends of which contact surfaces project outwards that are gripped over by the locking means (10).

13. The blow molding machine according to claim 12,
**characterized in that** an outwardly projecting plate (13) is respectively attached to the free ends of the vertical legs (14).

14. The blow molding machine according to any one of claims 1 to 13,
**characterized in that** the piston rod (2) is connected to a U-shaped guide (5) having vertical bars guided in through holes (17) in the horizontal plate (16) of the mounting (15).

15. The blow molding machine according to any one of claims 1 to 14,
**characterized in that** the calibration device is suspended via a hinge from a machine frame (19).

## Revendications

1. Machine de moulage par soufflage comportant une unité de fermeture, qui présente des moitiés de moule de soufflage (7) montées sur des plaques de serrage (8) et qui est déplaçable entre un poste de tête et un poste de calibrage, qui comporte un cylindre de calibrage (1) dont la tige de piston (2) est reliée à un mandrin de soufflage (3) et une bague de coupe (4) qui, lors du calibrage, est appliquée par pression à une mâchoire de coupe (9) du moule de soufflage, où est fixé à une des plaques de serrage (8) un moyen de fixation respectivement de couplage qui, lors du calibrage, peut être en prise par force avec un support qui fait partie du dispositif de calibrage,
**caractérisée**
**en ce qu'**est fixé également à l'autre plaque de serrage (8) un moyen de fixation respectivement de couplage (10) qui, lors du calibrage, peut être en prise par force avec le support (15) du dispositif de calibrage de sorte que le flux des forces produit par les forces de réaction entre les moitiés du moule de soufflage et le cylindre de calibrage est le plus court possible et est égal pour les deux moitiés du moule de soufflage.

2. Machine de moulage par soufflage selon la revendication 1,
**caractérisée en ce que** les moyens de fixation respectivement de couplage sont des installations de verrouillage.

3. Machine de moulage par soufflage selon la revendication 1 ou 2,
**caractérisée en ce que** les installations de verrouillage (10) sont pivotantes et, à l'état pivoté vers le haut, peuvent être en prise par force avec le support (15).

4. Machine de moulage par soufflage selon l'une des revendications 1 à 3,
**caractérisée en ce que** les installations de verrouillage (10) ont une forme de crochet, dont le tronçon d'extrémité coudé (12) peut passer sur une face de contact (13) du support (15).

5. Machine de moulage par soufflage selon l'une des revendications 1 à 4,
**caractérisée en ce que** les installations de verrouillage (10) peuvent pivoter autour d'axes horizontaux (11).

6. Machine de moulage par soufflage selon l'une des revendications 1 à 5,
**caractérisée en ce que** les installations de verrouillage (10) peuvent être pivotées selon environ 90°.

7. Machine de moulage par soufflage selon l'une des revendications 1 à 6,
**caractérisée en ce que** chaque installation de verrouillage respectivement chaque crochet (10) repose sur un axe de rotation associé (11), qui est en liaison avec une commande à came non tournante (20) mais déplaçable axialement par rapport au crochet (10) qui, lorsqu'elle heurte une butée (21), est déplaçable contre la force de ressort et, ce faisant, fait tourner l'axe de rotation (11).

8. Machine de moulage par soufflage selon l'une des revendications 1 à 7,
**caractérisée en ce que** l'axe de rotation (11) est relié solidement à une tringlerie de liaison (22) qui est guidée avec un rouleau (23) dans une rainure en forme de spirale (24) et la commande à came (20).

9. Machine de moulage par soufflage selon l'une des revendications 1 à 8,
**caractérisée en ce qu'**il est fixé à la commande à came (20) un bras latéral (24a) avec un rouleau (25) qui est logé dans une voie de guidage axiale (26).

10. Machine de moulage par soufflage selon l'une des revendications 1 à 9,
**caractérisée en ce qu'**une tige d'éjection (28) fait saillie depuis le côté frontal de la commande à came (20), qui heurte la butée (21).

11. Machine de moulage par soufflage selon l'une des revendications 1 à 10,
**caractérisée en ce que** les butées (21) sont positionnées de telle sorte au poste de calibrage que les commandes à came (20) peuvent venir sur les butées (21) seulement lorsque le moule de soufflage est fermé.

12. Machine de moulage par soufflage selon l'une des revendications 1 à 11,
**caractérisée en ce que** le support présente un cadre en forme de U inversé avec une plaque horizontale (16) à travers laquelle passe au milieu le cylindre de calibrage (1), et des branches verticales (14) à partir des extrémités libres desquelles les faces de contact font saillie vers l'extérieur, sur lesquelles passent des verrous (10).

13. Machine de moulage par soufflage selon la revendication 12,
**caractérisée en ce qu'**à chaque fois une plaque (13) faisant saillie vers l'extérieur est appliquée aux extrémités libres des branches verticales (14).

14. Machine de moulage par soufflage selon l'une des revendications 1 à 13,
**caractérisée en ce que** la tige de piston (2) est reliée à un guidage en forme de U (5) dont les longerons verticaux sont guidés dans des perçages traversants (17) de la plaque horizontale (16) du support (15).

15. Machine de moulage par soufflage selon l'une des revendications 1 à 14,
**caractérisée en ce que** le dispositif de calibrage est accroché par une articulation au bâti de machine (19).
